# EUROPEAN PATENT APPLICATION

(11) **EP 0 844 760 A2**
(43) Date of publication of application: **27.05.1998**
(21) Application number: 97309484.0
(22) Date of filing: 25.11.1997
(51) Int. Cl.: H04L 1/18

(54) **Radio broadcast system with automatic retransmission request**

(30) Priority: 25.11.1996 JP 313165/96
(71) Applicant: NEC CORPORATION, Tokyo (JP)
(72) Inventor: Fujiwara, Ryuhei, Minato-ku, Tokyo (JP)
(74) Representative: Orchard, Oliver John

(57) **Abstract**

A radio broadcast system includes a base station and a plurality of subsidiary stations located at various positions around the base station. Each subsidiary station includes a detection unit for detecting an error in received data, and a unit for transmitting a burst retransmission request signal (NAK signal) upon the detection of an error in the received data, and transmits no signals for a limited time, except an NAK signal for the reception of broadcast data containing an error. The base station detects the NAK signal within the limited period of time, or regards, the detection of a radio carrier having a predetermined time length as the detection of the NAK signal.

## Description

The present invention relates to a radio broadcast system.

Some previously proposed communication systems provide confirmation of the receipt of broadcast information to a plurality of subsidiary stations located around one base station. For example, there are polling methods in which a base station sequentially inquires of all subsidiary stations about a transmission. In one method, known as the ACK method subsidiary stations which have received information properly make a response. In another method known as the NAK method data retransmission is required only in the case of transmission failures.

A method has been proposed of removing, from service, subsidiary stations which frequently issue a data retransmission request or make no response, thereby enabling the efficient broadcasting of information to a plurality of subsidiary stations (improving the transmission throughput) (e.g., such a method has been proposed in Japanese Unexamined Patent Publication No. 63-12943). A method of transmitting identical data a number of times in order to improve the communication quality, thereby omitting the transmission confirmation procedure such as ACK/NAK, has been proposed e.g., in Japanese Unexamined Patent Publication No. 63-246938.

In these earlier proposals, a condition for the employment of the NAK method in a radio broadcast is that the state of the radio transmission between the subsidiary stations and the base station is so good that the transmission need not be confirmed. If a subsidiary station which does not satisfy this condition is included in the system, retransmission control is always carried out for the subsidiary station, so that the throughput of the entire system is reduced. To prevent a reduction in the throughput, generally, a means for removing the subsidiary station which frequently generates an NAK signal from the service, or a means for transmitting identical data a number of times in order to improve the communication quality must also be used. In this case, the ability to receive the NAK signal from the base station is an important parameter influencing the transmission capability and quality of the system. However, an NAK signal using a coding code defined in the system is generally processed in the same way as data and does not particularly require any special measure for increasing the probability of obtaining reception. Degradation in the NAK signal reception rate makes the base station determine erroneously that the broadcast data has been properly transmitted to all subsidiary stations. For this reason, the means for optimizing the transmission capability and the quality of the system may not normally be selected.

An embodiment to be described below, by way of example in illustration of the invention provides an improvement in the NAK signal reception rate of a base station for carrying out a radio broadcast based on the NAK method in a system constituted by a base station and a plurality of subsidiary stations located around the base station.

In a particular arrangement to be described by way of example in illustration of the present invention, a radio broadcast system includes a base station and a plurality of subsidiary stations located at various positions around the base station, in which each subsidiary station has detection means for detecting an error in received data, and means for transmitting a burst retransmission request signal (NAK signal) upon the detection of an error from the received data, and transmits no signals for a limited time, except the NAK signal for the reception of broadcast data containing an error, and in which the base station detects the NAK signal within the limited time or regards the detection of a radio carrier having a predetermined length as the detection of the NAK signal.

In one particular arrangement all of the subsidiary stations use a unique code for the NAK signal.

In another arrangement the subsidiary station transmits no signals except the NAK signal for the predetermined time by using, as a trigger, the receipt of the broadcast data containing an error.

In yet a further arrangement a transmission time for the NAK signal is managed by forming a periodic frame depending on the base station.

The subsidiary station has in one arrangement detection means for detecting an error in the received data, and means for transmitting the burst retransmission request signal (NAK signal) upon the detection of an error from the received data. When broadcast data containing an error is received, the NAK signal is transmitted within a permitted time. On the other hand, the base station has NAK signal detection means, and means for counting the NAK signal expected reception time. The base station monitors the NAK signal only within the expected reception time.

The NAK signal detection means may include means for processing/detecting modulated data, e.g., means for performing error detection/correction and majority-receiving transmitted data having the same code, and means, constituted by a function of the measurement of the received field of the radio unit and a timer, for detecting that the received field value in the predetermined time exceeds a predetermined value.

The reception rate can also be increased by defining a unique code for the NAK signal in units of base stations.

In the above aspects, even in the case of congestion, there is a high probability that the NAK signal can be properly received by the base station depending upon the congestion time relationship as far as the plurality of subsidiary stations using the same code for the NAK signal are concerned. Even when an error is generated in the received data by congestion, because of the time relationship, the base station need not know the identity of the subsidiary station which has transmitted the NAK signal, in order to start retransmission processing or to perform statistical processing of the system reliability or the like.

Therefore, the means in the base station for counting the expected reception time in which the NAK signal is likely to be received from the subsidiary station in the system starts the counting operation as a result of being triggered by a broadcast (transmission). During counting, the NAK signal detection means detects the NAK signal as a result of processing the received signal. Alternatively, the reception of a radio wave having a length in time measured by the timer may be detected by measuring the received field which is regarded as equivalent to detection of the NAK signal. With this arrangement, the NAK signal reception rate can be increased, and the transmission quality of the system can be improved.

The transmission time of the NAK signal can be made to depend on the broadcast data, as described above. However, the transmission time can also be set according to a frame having a predetermined period.

As described above, the combination of subsidiary stations complying with the procedure in which no signals are transmitted except the NAK signal in the limited time given by the base station, and a base station which detects the NAK signal code in the limited time, or uses the means for determining the detection of the NAK signal in accordance with the arrival of a radio carrier to improve the NAK signal detection rate, provides a reliable radio broadcast system.

The following description and drawings disclose, by means of an example, the invention which is characterised in the appended claims, whose terms determine the extent of the protection conferred hereby.

In the drawings:-
Fig. 1 is a block schematic diagram of a base station,
Fig. 2 is a view showing the format of a signal transferred between the base station and a subsidiary station,
Fig. 3 is a block schematic diagram showing a detailed arrangement of an NAK signal detection unit shown in Fig. 1, and
Fig. 4 is a timing chart of signals in various portions of the NAK signal detection unit shown in Fig. 1.

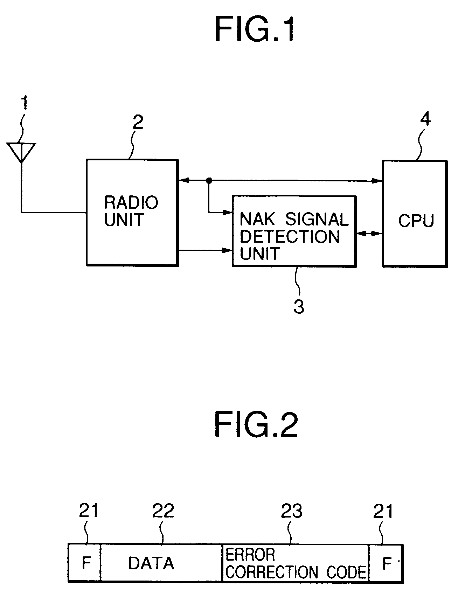

Referring to Fig. 1, the base station includes an antenna 1, a radio unit 2, an NAK signal detection unit 3, and a CPU 4. A radio wave from one subsidiary station (not shown) is input to the radio unit 2 via the antenna 1, demodulated, and subjected to error correction. Thereafter, information is only selected by the CPU 4. The information is broadcast via the radio unit 2 as broadcast data, after an error correction code has been added to the information by the CPU 4.

The NAK signal detection unit 3 receives the output after demodulation and error correction and according to the field strength signal of the received signal from the radio unit 2. The broadcast data transmitted from the antenna 1 is received by a plurality of subsidiary stations located around the base station.

Data transmitted between the base station and a subsidiary station has a packet structure delimited by known codes (flags) 21, as shown in Fig. 2, and contains data 22 and an error correction code (e.g., a BCH code) 23. A radio carrier is also burst-transmitted according to this format. An NAK signal sent from the subsidiary station also has the same format, and the data 22 contains a code representing NAK. The NAK signal is also selected by the CPU 4, but not transmitted back from the CPU 4.

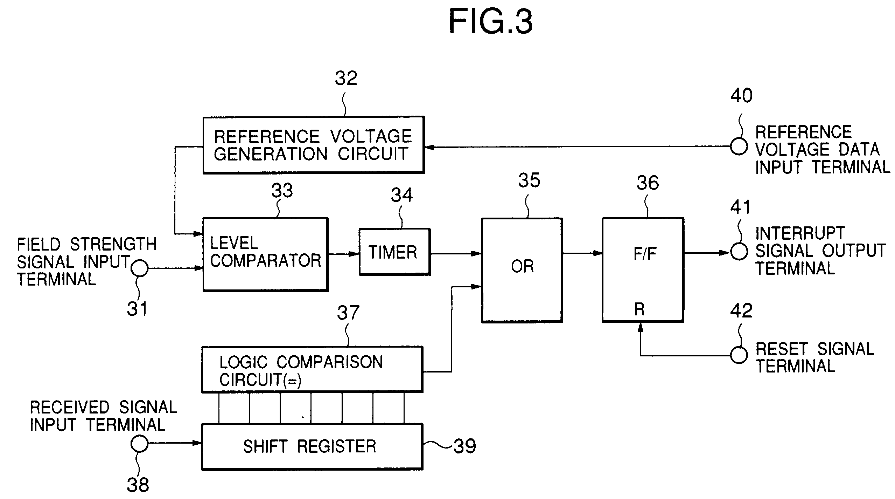

Fig. 3 is a block schematic diagram for explaining the details of the NAK signal detection unit 3.

A field strength signal input from the radio unit 2 to a field strength input terminal 31 is compared by a level comparator 33 with a reference voltage generated by a reference voltage generation circuit 32, on the basis of a value input from the CPU 4 through a reference voltage data input terminal 40.

When the field strength signal level is higher than the reference voltage, the output from the level comparator 33 cancels the resetting of a timer 34 to start the counting operation. After counting a predetermined time, the timer 34 generates a latch pulse. The latch pulse sets an RS flip-flop (F/F) 36 through an OR gate 35. With this series of operations, the arrival of a burst signal having a predetermined field strength or more, and a predetermined time or more from the subsidiary station is detected.

On the other hand, a received signal which has undergone demodulation and error correction is input from the radio unit 2 to a shift register 39 through a received signal input terminal 38 and compared with the pattern of a code corresponding to the NAK signal in units of bits by a logic comparison circuit 37. When patterns match, the logic comparison circuit 37 generates a latch pulse to set the F/F 36 through the OR gate 35, as in field detection. A reset signal is supplied from the CPU 4 to the F/F 36 through a reset signal input terminal 42. The CPU 4 transmits back broadcast data, cancels the reset only during an expected time in which the NAK signal is likely to be detected, and waits for the setting of the F/F 36.

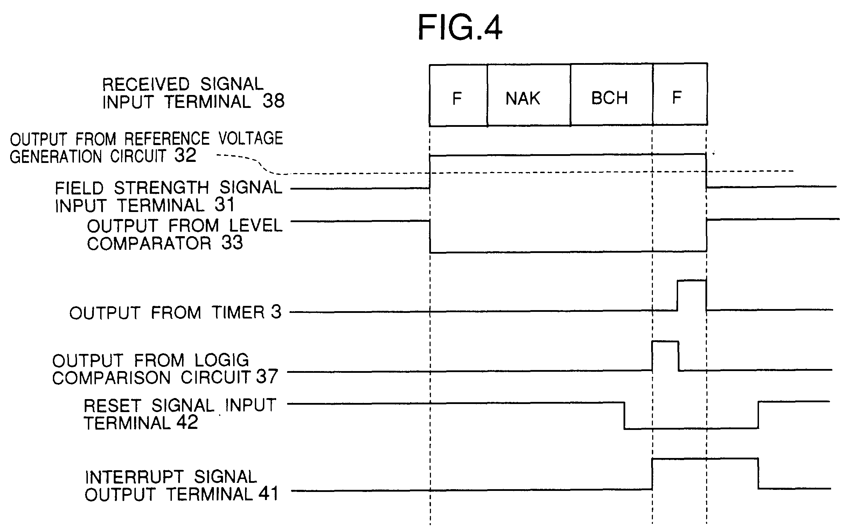

Fig. 4 is a timing chart showing the input/output timings of the circuits shown in Fig. 3.

When the F/F 36 is set, the CPU 4 is "interrupted" through an interrupt signal output terminal 41, so that the CPU 4 is notified of the reception of the NAK signal. If the expected time has elapsed without setting the F/F 36, it is determined that the NAK signal has not been received. More specifically, the NAK signal detection unit 3 determines the detection of the NAK signal when the NAK signal code is detected within the expected reception time, or when a radio carrier has arrived, although the NAK signal code cannot be detected because of a transmission error beyond the error correction capability.

The operation of the NAK signal detection unit 3 is validated by defining, between the base station and the subsidiary stations, that no signals except the NAK signal are transmitted from the subsidiary stations for a predetermined time after the transmission of the broadcast data from the base station. Alternatively, a time frame may be defined on the basis of the broadcast data to limit the NAK signal sending time.

The following methods can also be used to raise the NAK signal reception rate.
(1) NAK signal codes used by all subsidiary stations associated with one base station are unified. Even when a plurality of subsidiary stations which are almost equidistantly separated from the base station simultaneously transmit data, and the field strengths of signals received at the base station momentarily change in units of the subsidiary stations to result in a phenomenon which leaves only the strongest, a code representing NAK can be demodulated with a high probability of success.
(2) The effect can be further increased when a plurality of short codes representing NAK are set in the data portion of the NAK signal, and majority reception is made without error correction.

It will be understood that although the invention has been described by way of example with reference to a particular embodiment, variations and modifications thereof, as well as other embodiments may be made within the scope of the appended claims.

## Claims

1. A radio broadcast system including a base station and a plurality of subsidiary stations located at various positions around the base station, wherein each subsidiary station has detection means for detecting an error in received data, and means for transmitting a burst retransmission request signal (NAK signal) upon the detection of an error in received data, and transmits no signals for a limited time, except the NAK signal for the reception of broadcast data containing an error, and the base station detects the NAK signal within the limited time, or regards the detection of a radio carrier having a predetermined time length as the detection of the NAK signal.

2. A system as claimed in claim 1, wherein all of the subsidiary stations use a unique code for the NAK signal.

3. A system as claimed in claim 1, wherein a subsidiary station transmits no signals except the NAK signal for the predetermined time by using, as a trigger, the receipt of the broadcast data containing an error.

4. A system as claimed in claim 1, wherein a transmission time for the NAK signal is determined by forming a periodic frame depending on the base station.
